# FASCICULE DE BREVET EUROPEEN

(11) **EP 1 723 098 B1**
(45) Date de publication et mention de la délivrance du brevet: **15.10.2008**
(21) Numéro de dépôt: 05735540.6
(22) Date de dépôt: 14.03.2005
(51) Int. Cl.: C07C 67/313, C07C 67/31, C07C 45/28, C07B 41/06, C07B 41/04, C07B 35/04, C07C 5/50

(54) **PROCEDE DE FONCTIONNALISATION DE DERIVES OLEFINIQUES CONJUGUES OU CONJUGABLES ASSISTEE PAR UN MEDIATEUR ELECTROPHORE DU TYPE TEMPO**
VERFAHREN ZUR FUNKTIONALISIERUNG VON KONJUGIERTEN ODER KONJUGIERBAREN DERIVATEN UNTER ZUHILFENAHME EINES ELEKTROPHOREN MEDIATORS VOM TEMPO-TYP
METHOD FOR THE FUNCTIONALIZATION OF CONJUGATED OR CONJUGATABLE DERIVATIVES ASSISTED BY A TEMPO-TYPE ELECTROPHORIC MEDIATOR

(30) Priorité: 12.03.2004 FR 0402619
(43) Date de publication de la demande: 22.11.2006
(73) Titulaire: Centre National De La Recherche Scientifique-CNRS, 75794 Paris Cedex 16 (FR); UNIVERSITE DE POITIERS, 86034 Poitiers Cedex (FR)
(72) Inventeur: BELGSIR, El Mustapha, F-86000 Poitiers (FR); BRETON, Tony, F-17180 Périgny (FR); LIAIGRE, Denis, F-79450 Saint Aubin le Cloud (FR)
(74) Mandataire: Bredema
(86) Numéro de dépôt international: PCT/FR2005/000605
(87) Numéro de publication internationale: WO 2005/097726

(56) Documents cités:
- CARL R JOHNSON ET AL.: "Application of enzymes in the synthesis of bioactive polyols" IND. J. CHEM., vol. 32, no. b, 1993, pages 140-144, XP008037904
- KARSTEN SCHNATBAUM, HANS J. SCHÄFER: "Electroorganic Synthesis 66: Selective Anodic Oxidation of Carbohydrated Mediated by TEMPO" SYNTHESIS, no. 5, 1999, pages 864-72, XP001189593
- MANGZHU ZHAO ET AL.: "Oxidation of Primary Alcohols to Carboxylic Acids with Sodium Chlorite Catalyzed by TEMPO and Bleach" J. ORG. CHEM., vol. 64, 1999, pages 2564-66, XP002105790

## Description

La présente invention concerne un procédé de fonctionnalisation d'une molécule chimique possédant au moins deux doubles liaisons conjuguées ou conjugables ou contenant au moins une double liaison conjuguée avec une structure riche en électrons. Ladite fonctionnalisation est obtenue par addition de composés nucléophiles (Nu) comprenant au moins un atome choisi parmi l'oxygène (O), l'azote (N), le soufre (S), le fluor (F) ou l'iode (I).

L'article de Johnson et al. (Indian J. Chem., 1993, 32B, 140-144) décrit la fonctionnalisation du cycloheptatriène en tropone en faisant intervenir un ion tropylium obtenu par réaction avec HBF₄/Ph₃COH), lequel réagit avec un carbonate.

Parmi les avantages du procédé selon invention, il faut noter que :
- le taux d'insaturation de la molécule fonctionnalisée n'est pas diminué suite à la fonctionnalisation ;
- la fonctionnalisation est assistée par un médiateur d'oxydation ;
- les transformations sont menées dans des conditions normales de température et de pression.

De manière très générale, invention a pour objet un procédé de fonctionnalisation d'une molécule chimique possédant au moins deux doubles liaisons ou contenant au moins une double liaison conjuguée avec une structure riche en électrons, en présence d'un médiateur électrophore et d'un composé nucléophile.

Selon un mode de réalisation particulier de l'invention, le procédé de fonctionnalisation peut inclure en outre un système de régénération électrochimique du médiateur électrophore.

Par fonctionnalisation, on entend selon la présente invention l'introduction d'un groupement fonctionnel dans une molécule insaturée, linéaire ou cyclique, conjuguée ou conjugable, possédant au moins deux doubles liaisons ou contenant au moins une double liaison conjuguée avec une structure riche en électrons. A titre d'exemple, la fonctionnalisation d'un diène non conjugué conduit au diène conjugué fonctionnalisé (Formule I):

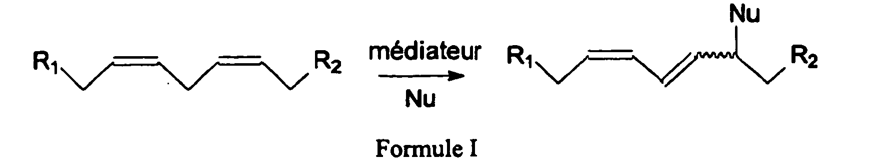

Par composé nucléophile, on entend selon l'invention toute molécule chimique excédante en électrons et donc susceptible d'agir sur des espèces déficientes en électrons et comprenant au moins un atome choisi parmi l'oxygène (O), l'azote (N), le souffre (S), le fluor (F) ou l'iode (I). De préférence, le composé nucléophile comprend un atome choisi parmi l'oxygène (O) ou le soufre (S).

Par médiateur électrophore, on entend selon l'invention, la forme dite oxydée (appelée oxoammonium ou nitrosonium) d'une molécule comportant au moins un radical aminoxyle (Formule 11): 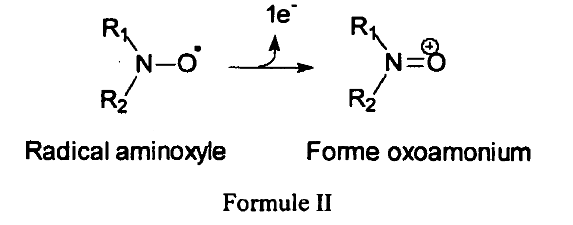 dans laquelle R₁ et R₂ sont des groupements, identiques ou différents, cycliques ou linéaires.

Préférentiellement selon l'invention, le médiateur électrophore est la forme oxoammonium d'une molécule chimique de la famille des radicaux aminoxyles bi-per-méthylés, très préférentiellement un radical aminoxyle bi-per-méthylé portant au moins un radical aminoxyle.

A titre d'exemple, on peut citer le 2,2,6,6-tetraméthylpiperidinyl-1-oxy (TEMPO) ou encore le 4-acétamido-TEMPO (Formule III): 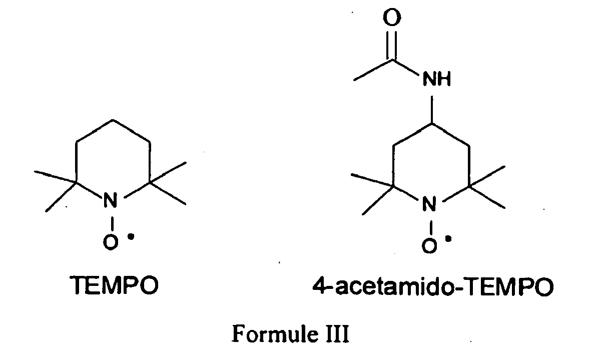 La préparation du médiateur à partir du radical aminoxyle peut être réalisée :
- soit par oxydation électrochimique dudit radical aminoxyles à l'anode d'un système électrochimique selon par exemple Semmelhack et al. (J. Am. Chem. Soc., 1983, 105, 4492-4494) ;
- soit par l'action d'un acide fort sur ledit radical aminoxyle. La forme oxoammonium est alors obtenue sous forme de sels selon Golubev et al. (Ser. Khim. 1965, 1927).

Selon l'invention, le médiateur peut être utilisé en quantité stoechiométrique ou en quantité catalytique, assisté par un système électrochimique.

Lorsque le médiateur est utilisé en quantité stoechiométrique, la fonctionnalisation peut être conduite à des températures allant de 0 à 80°C, préférentiellement de 5°C à 40°C et à un pH allant de 0 à 13, préférentiellement de 4 à 7 selon deux voies :

### La voie chimique :

Dans une première étape, dans un réacteur contenant un milieu réactionnel organique ou hydro-organique, on introduit successivement la molécule à fonctionnaliser, au moins un équivalent de médiateur et au moins un équivalent d'un composé nucléophile. Dans une deuxième étape, le mélange est soumis à une agitation mécanique ou magnétique pendant 1 à 10 heures, préférentiellement pendant 2 à 5 heures. Dans une troisième étape, le mélange réactionnel est purifié selon les protocoles connus de l'Homme du Métier.

### La voie électrochimique :

Dans une première étape, un radical aminoxyle est introduit en quantité au moins stoechiométrique dans une solution électrolytique contenant un électrolyte support. Le radical aminoxyle est oxydé en oxoammonium (le médiateur). La réaction d'oxydation a lieu en soumettant l'électrode de travail à un potentiel qui peut être compris entre 0 et 1,2 volts, préférentiellement entre 0 et 0,6 volts par rapport à une électrode de référence Ag/AgNO₃. Le potentiel est appliqué à l'aide d'un générateur et contrôlé à l'aide d'un potentiostat, jusqu'à transformation complète du radical aminoxyle en ions oxoammonium.

Dans une deuxième étape, en l'absence de tout potentiel, la molécule à fonctionnaliser et au moins un équivalent de nucléophile sont introduits successivement.

Dans ce cas, la quantité du médiateur peut être de 0,5 à 5 équivalents par rapport à la molécule à fonctionnaliser, préférentiellement de 1 à 4 équivalents, en fonction de la vitesse de réaction souhaitée et le type de nucléophile.

La solution peut être agitée pendant un temps compris entre 1 à 10 heures, préférentiellement compris entre 2 et 5 heures.

Dans une troisième étape, on purifie le produit brut obtenu selon tout protocole connu de l'homme du métier. A titre d'exemple, on peut citer la flash chromatographie.

Selon un autre mode particulier de réalisation de l'invention, lorsque dans la deuxième étape le médiateur électrophore est utilisé en quantité catalytique, celui-ci doit être régénéré par un système électrochimique. On introduit successivement une quantité catalytique de radical aminoxyle, la molécule à fonctionnaliser et une quantité au moins équivalente du nucléophile dans la solution électrolytique. La réaction a lieu à pH alcalin. L'électrode de travail peut être soumise à un potentiel compris entre 0 et 1,2 volts, préférentiellement entre 0 et 0,6 volts par rapport à une électrode de référence.

Dans ce cas, le médiateur électrophore est en une quantité allant de 2% à 50% par rapport à la molécule à fonctionnaliser, préférentiellement de 5% à 30%.

Selon l'invention, que l'on soit en mode stoechiométrique ou en mode catalytique, le nucléophile peut être une molécule chimique excédante en électrons comprenant au moins un atome choisi parmi l'oxygène (O), l'azote (N), le soufre (S), le fluor (F) ou l'iode (I), de préférence une molécule chimique choisie parmi H₂O, RCOO', MeOH, N₃⁻, SCN⁻, F⁻, I⁻ ou encore CH₃S⁻.

Le nucléophile peut être utilisé selon le procédé de l'invention en une quantité allant de 1 à 10 équivalents et préférentiellement de 1 à 5 équivalents. Le nucléophile peut être le solvant dans lequel la réaction a lieu.

La réaction peut être réalisée dans tout réacteur électrochimique connu de l'Homme du Métier, fermé ou à circulation, composé au moins d'une électrode de travail (anode) et d'une contre-électrode (cathode).

De manière préférentielle, le réacteur électrochimique peut en outre comporter une électrode de référence qui peut être toute électrode de référence généralement utilisée pour de telles réactions comme par exemple une électrode Ag/AgNO₃, ou encore une électrode au calomel saturé (ECS). Préférentiellement, l'électrode de référence est une électrode Ag/AgNO₃. La présence d'une électrode de référence permet de contrôler le potentiel de l'électrode de travail.

Particulièrement, le réacteur électrochimique comprend au moins deux ou trois électrodes. Le réacteur électrochimique comprend donc au moins :
- une électrode de travail,
- une contre-électrode séparée de l'électrode de travail par une membrane échangeuse d'ions (pour le système à deux ou trois électrodes),
- une électrode de référence (pour le système à trois électrodes),
- un générateur,
- un potentiostat (pour le système à trois électrodes).

L'électrode de travail est séparée de la contre-électrode par une membrane échangeuse d'ions comme par exemple une membrane du type Nafion®, préférentiellement une membrane échangeuse de cations du type Nafion® 423.

Selon l'invention, le potentiel appliqué à l'électrode de travail peut être compris entre 0 et 1,2 volts, préférentiellement entre 0 et 0,6 volts par rapport à l'électrode de référence Ag/AgNO₃.

Le milieu réactionnel, utilisable selon le procédé de l'invention, peut être tout milieu réactionnel connu de l'Homme du Métier, permettant l'oxydation du radical aminoxyle en ion oxoammonium (le médiateur) et la réaction de fonctionnalisation.

Par milieu réactionnel, on entend selon l'invention tout milieu permettant la solubilisation des espèces réactives et de l'électrolyte support dans le cas où la réaction est conduite par voie électrochimique. A titre d'exemple de milieu utilisable selon l'invention, on peut citer l'acétonitrile (ACN), le tétrahydrofurane (THF), le diméthylformamide (DMF), le diméthylsulfoxyde (DMSO) et tout autre mélange eau/solvant organique.

Préférentiellement, lorsque la molécule à fonctionnaliser n'est pas soluble dans l'eau, on utilise selon l'invention l'acétonitrile (ACN) ou le diméthylformamide (DMF). Ces solvants peuvent être utilisés secs ou en présence d'une quantité d'eau allant de 1 à 80% et préférentiellement de 5 à 40% lorsque le nucléophile choisi est l'eau.

Dans le cas du procédé électrochimique, le milieu réactionnel contient en outre un sel-support permettant le passage du courant dans la solution à des concentrations variant entre 0,02M à 2M, préférentiellement de 0,05M à 0,5M. A titre d'exemple, le sel peut être choisi parmi NaClO₄, LiClO₄, LiCl. Préférentiellement, en milieu organique ou hydroorganique, le sel-support est NaClO₄

Selon l'invention, la molécule chimique à fonctionnaliser, possède au moins deux doubles liaisons ou contient au moins une double liaison conjuguée avec une structure riche en électron. Ainsi, la molécule chimique à fonctionnaliser peut être une oléfine linéaire ou cyclique.

Dans le cas particulier des oléfines grasses poly-insaturées, l'application du procédé selon l'invention conduit à de nouvelles molécules dont les doubles liaisons initiales se retrouvent conjuguées.

A titre d'exemple, on peut citer comme molécule fonctionnalisable les oléfines, particulièrement une oléfine choisie parmi les oléfines grasses polyinsaturées comme par exemple le méthyl-linoléate ou le méthyl-linolénate.

Selon le procédé de l'invention, la réaction de fonctionnalisation, et/ou les réactions d'oxydation du radical aminoxyle peut (peuvent) être réalisée(s) à une température variant de 0 à 80°C, préférentiellement de 2 à 40°C.

Selon encore un autre mode particulier de réalisation de l'invention, le procédé peut comporter une étape supplémentaire préalable de préparation du médiateur.

Ainsi, selon le procédé de l'invention, dans le cas de la voie chimique, les radicaux aminoxyles peuvent être utilisés en une quantité pouvant aller de 1 à 4 équivalents par rapport à la molécule à fonctionnaliser, en fonction de la vitesse de réaction souhaitée et le type de nucléophile.

Ainsi, selon le procédé de l'invention, dans le cas de la voie électrochimique, les radicaux aminoxyles peuvent être utilisés en une quantité pouvant aller de 5 à 100% et préférentiellement de 5 à 30% par rapport à la molécule à fonctionnaliser, en fonction de la vitesse de réaction souhaitée et le type de nucléophile.

Dans le cas de l'utilisation du médiateur en quantité catalytique, l'utilisation d'un milieu réactionnel organique ou hydro-organique alcalin permet la régénération de la forme réduite du médiateur.

Par milieu organique ou hydro-organique réactionnel alcalin, on entend selon l'invention, un milieu dont le pH est compris entre 7 et 12, préférentiellement entre 9 et 11.

En effet, la présence d'une base B⁻ permet la médiamutation entre la forme réduite (hydroxylamine) et la forme oxydée (oxoammonium ou médiateur) du radical aminoxyle (Formule IV) :

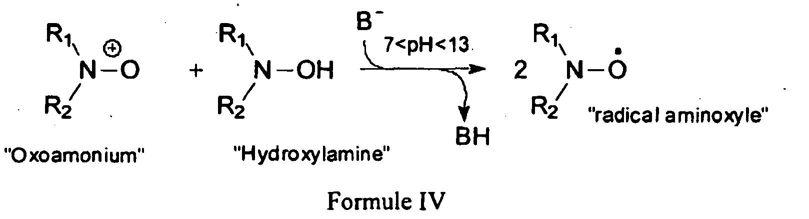

De cette façon, les radicaux aminoxyles formés s'oxydent à nouveau à l'anode. La base utilisable dans le milieu réactionnel peut être toute base organique ou inorganique, mais ne doit pas être oxydable par le médiateur, comme par exemple la 2,6-lutidine ou encore la pyridine.

Outre les dispositions qui précèdent, l'invention comprend encore d'autres dispositions qui ressortiront de la description qui va suivre, qui se réfère à des exemples de mise en oeuvre de l'invention.

Les exemples suivants illustrent l'invention et ne la limitent aucunement.

### Exemple 1 : Fonctionnalisation du méthyl-linolénate par une quantité catalytique d'acétamido-tempo assistée par électrochimie en présence d'eau :

La cellule de 50 cm³, en milieu acétonitrile/eau (12/1) contient :
   - NaClO₄ à 0,2 mol.l⁻¹
   - 300.10⁻³ ml de 2,6 lutidine
   - 64 mg d'acétamido-TEMPO (0,3 mmol)
   - 330.10⁻3 ml (1 mmol) de méthyl-linolénate 99,5%.
Le système électrochimique est composé de :
   - 2 électrodes de travail en carbone vitreux (50*20*2mm)
   - 1 contre-électrode en platine (20*20mm) isolée de l'électrode de travail par une membrane échangeuse de cations. Ce système permet d'éviter la réduction des radicaux aminoxyles à la contre-électrode.
   - 1 électrode de référence Ag/AgNO₃(0,1 M) ; E = 0,541 V/ESH
   - 1 générateur-potentiostat
Durant l'électrolyse, le potentiel des électrodes de travail est porté à 0,56V/Ag/AgNO₃ (0,1M). Le courant électrique passe de 50 mA en début de réaction à 1 mA après 6 heures de réaction et 580 coulombs consommés (6F/mol).
Le traitement du milieu réactionnel consiste à :
   - évaporer l'acétonitrile ;
   - reprendre dans 20 ml d'éther diéthylique et extraire avec 2 fois 20 ml d'eau le sel-support est des ions oxoammoniums ;
   - décantater et sécher la phase organique sur MgSO₄;
   - évaporer le solvant.
Le brut (280 mg) est dissout dans 0,2 ml d'acétone et élué sur une colonne chomatographique avec 500 ml d'éther/éther de pétrole (1/3). La fraction récupérée (87 mg, Rf=0.5) est un mélange d'esters gras de masse 306 g.mol⁻¹, monofonctionnalisés par un carbonyle et présentant 3 doubles liaisons dont deux conjuguées.

Après élution par 300 ml d'acétate d'éthyle, on récupère 120 mg (35%) de 9,16-dioxo-10,12,14-ocadécatriènoate de méthyle doublement fonctionnalisée et possédant une triple conjugaison des doubles liaisons (Formule V):

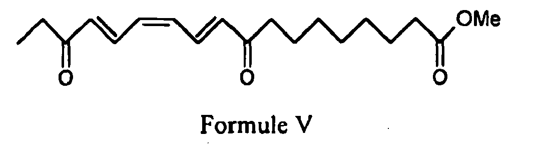

Le produit obtenu a une structure conforme aux analyses spectroscopiques et spectrométriques :

### (9,16-dioxo-(10,12,14)-ocadécatriénoate de méthyle)

RMN ¹H : δ_{H}(300MHz, CDCl₃) : 7.22(m, 2H, J 15, H₁₂, H₁₅) ; 6.68(dd, 2H, J 7, H₁₃, H₁₄) ; 6.32(dd, 2H, J 15,1, H₁₁, H₁₆) ; 3.66(s, 3H, H₁) ; 2.62(q, 2H, J 7.3, H₁₈) ; 2.57(t, 2H, J 6.5, H₉) ; 2.30(t, 2H, J 6.6, H₃) ; 1.61(m, 2H, H₆) ; 1.32(m, 8H, H₄, H₅, H₇, H₈) ; 1.01(t, 3H, J 7.3, H₁₉)

RMN ¹³C : δ_{c}(300MHz, CDCl₃) : 200.9(C₁₀), 200.6(C₁₇) ; 174.4(C₂) ; 140.4 (₁₂); 140.3(C₁₅) ; 138.3(C₁₃) ; 138.2(C₁₃) ; 132.2(C₁₁) ; 132.0(C₁₆) ; 51.5(C₁) ; 41.1 (C₉) ; 34.3(C₁₈) ; 34.0(C₃) ; 29.0(C₈) ; 29.0(C₆) ; 28.9(C₇) ; 24.4(C₅) ; 14.1(C₄) ; 8.1 (C₁₉)

MS : m/z = 320(6%), 289(2%), 263(5%), 163(15%), 57(100%), 55(59%).

### Exemple 2 : Fonctionnalisation du méthyl-linoléate par une quantité catalytique de TEMPO régénéré par électrochimie en présence d'eau :

Les conditions de réaction et les quantités de réactifs sont strictement identiques à celles citées dans l'exemple 1. La réaction est conduite sur 1 millimole de méthyl-linoléate à 45°C. Le courant passe de 55 mA à 0,5 mA en 4 heures après consommation de 384 coulombs (4F/mol).

Le traitement est identique à celui de l'exemple 1. Le mélange éther/éther de pétrole (1/4) est utilisé pour réaliser la purification sur colonne chromatographique.

Le produit obtenu, avec un rendement de 94%, est un mélange de 4 isomères monofonctionnalisés par une cétone en C₉ ou C₁₃. Les doubles liaisons de ces isomères sont conjuguées. La délocalisation électronique est donc de 6 électrons. Nous observons les sélectivités suivantes :

### 46% : 13-oxo-(9-cis, 11-trans)-octadecadiènoate de méthyle (Formule VI)

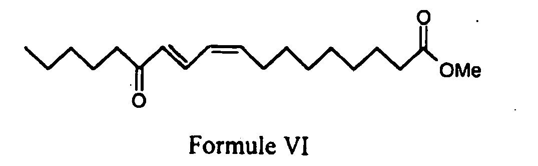

RMN ¹H : δ_{H}(300MHz, CDCl₃) : 7.44(dd, 1H, J 15.8, J 11.6, H₁₀) ; 6.12(d, 1H, J 15.30, H₁₃) ; 6.07(dd, 1H, J 10.67, H₁₂) ; 5.90-5.80(m, 1H, H₁₁) ; 3.63(s, 3H, H₁); 2.52(t, 2H, J 7.31, H₁₅) ; 2.29(t, 2H, J 6.43, H₃) ; 2.29(q, 2H, H₉) ; 1.59(m, 4H, H₄, H₁₆) ; 1.39(m, 2H, H₁₇) ; 1.29(m, 10H, H₁₈, H₈, H₇, H₆, H₅) ; 0.86(t, 3H, J 6, H₁₉)

RMN ¹³C : δ_{c}(300MHz, CDCl₃) : 201.0(C₁₄), 174.3 (C₂) ; 142.7(C₁₀) 137.0 (C₁₂); 129.3(C₁₃) ; 126.9 (C₁₁); 51.4(C₁) ; 41.1 (C₁₅) ; 34.0(C₃) ; 31.5(C₁₇) ; 29.4 (C₈) ; 29.2(C₆) ; 29.1(C₇) ; 29.0(C₉) ; 28.2(C₅) ; 24.8(C₄) ; 24.0(C₁₆) ; 22.5(C₁₈) ; 13.9(C₁₉)

MS : m/z = 308(22%), 277(6.2%), 177(27%), 151 (70%), 107(38%), 99(86%), 95(81%), 81 (100%)

### 43% : 9-oxo-(1-0-trans. 12-cis)-octadecadiènoate de méthyle (Formule VII)

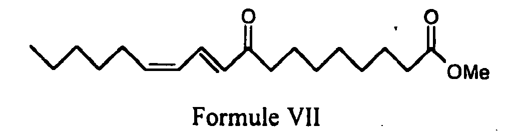

RMN ¹H : δ_{H}(300MHz, CDCl₃) : 7.44(dd, 1H, J 15.8, J 11.6, H₁₄) ; 6.12(d, 1H, J 15.30, H₁₁) ; 6.07(dd, 1H, J 10.67, H₁₂) ; 5.90-5.80(m, 1H, H₁₃); 3.63(s, 3H, H₁) ; 2.52(t, 2H, J 7.31, H₉) ; 2.29(t,2H,J 6.43, H₃) ; 2.29(q, 2H, H₁₅); 1.59(m, 4H, H₄, H₈) ; 1.39(m, 2H, H₇); 1.29(m, 10H, H₆, H₁₆, H₁₇, H₁₈, H₅) ; 0.86(t, 3H, J 6, H₁₉)

RMN¹³C : δ_{c}(300MHz, CDCl₃) : 201.0(C₁₀), 174.3 (C₂) ; 142.7(C₁₂) ; 137.0 (C₁₄) ; 129.3(C₁₁) ; 126.9(C₁₃) ; 51.4(C₁) ; 41.0(C₉) ; 34.0 (C₁₇) ; 31.4(C₃) ; 29.3 (C₁₆) ; 29.2(C₇) ; 29.1(C₅) 29.0(C₁₅) ; 28.2(C₆) ; 24.8(C₄) ;24.2(C₈) ; 22.5(C₁₈) ; 13.9(C₁₉)

MS : m/z = 308(12%), 277(6.1%), 237(34%), 166(21%), 151(29%), 95 (100%), 81(46%)

6% : 13-oxo-(9-cis, 11-cis)-octadecadiènoate de méthyle (Formule VIII)

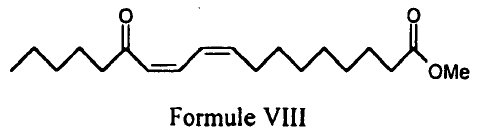

5% : 9-oxo-(10-cis, 12-cis)-octadecadiènoate de méthyle (Formule IX)

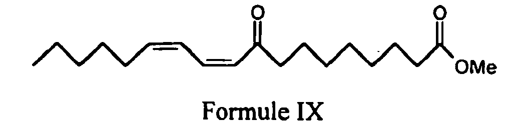

### Exemple 3 : Fonctionnalisation du méthyl-linoléate par une quantité catalytique de TEMPO régénéré par électrochimie en présence de méthanol :

Les réactions réalisées avec H₂O en tant que nucléophile sont transposables aux autres nucléophiles tels que le méthanol (MeOH). La réaction est alors conduite dans l'acétonitrile anhydre. Le méthanol est ajouté lorsque les courants deviennent résiduels.

La cellule de 50cm³ contient :
- NaClO₄ à 0,5 mol.l⁻¹
- 300.10⁻³ ml de 2,6 lutidine
- 64 mg d'acétamido-TEMPO (0,3 mmol)
- 330.10⁻³ ml (1 millimole) de méthyl-linolénate 99,5%.
- le tout dans l'acétonitrile anhydre.

Durant l'électrolyse, le potentiel des électrodes de travail est porté à 0,56V/Ag/AgNO₃(0,1 M). Le courant électrique passe de 40 mA en début de réaction à 1 mA après 3 heures de réaction et 230 coulombs consommés (2.4F/mol). Le traitement du milieu réactionnel est identique à celui de l'exemple 1.

La purification est réalisée sur colonne chromatographique de silice en utilisant comme éluant le mélange éther/éther de pétrole (1/4).

Le rendement obtenu en produit purifié est de 16%.

Les molécules obtenues possèdent le système conjugué représenté ci-après, le reste de la molécule étant inchangé (Formule X):

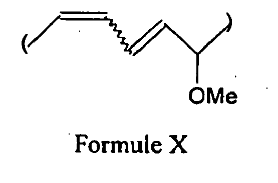

### isomère 13-metoxy-9,cis-11,trans-octadecadienoic acid, methyl-ester

RMN ¹H : δ_{H}(300MHz, CDCl₃) : 5.91(dd, 1H, J 15.5, J 11, H₁₂) ; 5.80 (dd, 1H, J 11.10, H₁₁) ; 5.57(dd, 1H, J15, H₁₃) ; 5.32(m, 1 H, H₁₀) ; 3.56(s, 3H, H₁) ; 3.26 (m, 1H, H₁₄) ; 3.19(s, 3H, H₁₅) ; 2.17(t, 2H, J 18, H₃) ; 2.00(q, 2H, J 12, H₉) ; 1.44 (m, 4H, H₁₈, H₁₉) ; 1.26(m, 14H, H₄, H₅, H₆, H₇, H₁₆, H₁₇) ; 0.90(t, 3H, H₂₀)

RMN ¹³C : δ_{c}(300MHz, CDCl₃) : 174.2 (C₂), 134.1 (C₁₂) ; 131.8 (C₁₀) ; 131.5 (C₁₃) ; 129.1(C₁₁) ; 78.8(C₁₄) ; 55.6 (C₁₅) ; 51.3(C₁) ; 34.1(C₃) ; 33.2(C₁₆) ; 29.3 (C₈) ; 29.0(C₆) ; 28.6(C₇); 28.1(C₉) ; 27.7(C₁₈) ; 26.9(C₅) ;25.2 (C₄) ; 25.1(C₁₇) ; 22.5(C₁₉) ; 13.9(C₂₀)

MS : m/z = 324(18%), 293(4%), 254(15%), 253(80%), 221 (12%), 167(63%), 97(100%)

La répartition isomérique est identique à celle de l'exemple 2.

### Exemple 4 : Fonctionnalisation du méthyl-linoléate par une quantité deux fois stoechiométrique de sels d'oxoammonium en milieu acide acétique anhydre :

Dans le cas de la fonctionnalisation par CH₃CO₂⁻, il s'agit d'effectuer la réaction en milieu acide acétique anhydre afin d'obtenir une fonctionnalisation immédiate par les ions acétate après formation du carbocation. La quantité de médiateur utilisé est de 2 équivalents.

Le milieu réactionnel est composé de :
- 40 cm³ d'acide acétique glacial
- 312 mg de TEMPO (2 mmol)
- 330.10⁻³ ml (1 mmol) de méthyl-linolénate 99,5%.

L'agitation est maintenue 8 heures. Le rendement chromatographique est de 24%. Le mélange d'isomères obtenu possède le système vinylique suivant (Formule XI):

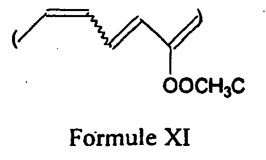

### isomère 13-acetoxy-9, cis-11, trans-octadecadienoic acid, methyl-ester

RMN ¹H : δ_{H}(300MHz, CDCl₃) : 6.14(dd, 1H, J 15.1, J 11, H₁₂) ; 5.88 (dd, 1H, J 11,H₁₁) ; 5.60(dd, 1H, J 15, H₁₃) ; 5.35(m, 1H, H₁₀) ; 5.18(q, 1H, J 6, H₁₄) ; 3.56(s, 3H, H₁) ; 2.17(t, 2H, J 6.5, H₃) ; 1.99(m, 4H, H₉, H₁₆) ; 1.50(q, 2H, H₁₇) 1.40(m, 8H, H₄, H₁₈, H₁₉, H₂₀) ; 1.26(m, 8H, H₅, H₆, H₇, H₈) ; 0.90(t, 3H, H₂₁)

RMN ¹³C : δ_{c}(300MHz, CDCl₃) : 174.2, (C₂), 170.1(C₁₅) ; 134.3(C₁₃) ; 134.0 (C₁₂) ; 131.0(C₁₀) ; 127.6(C₁₁) ; 74.0(C₁₄) ; 51.3(C₁) ; 34.3(C₁₇) ; 34.0(C₃) ; 29.3, (C₈) ; 29.0(C₆) ; 28.6(C₇) ; 28.1 (C₉) ; 26.9(C₅) ; 25.2(C₄) ; 26.7(C₁₉) ; 25.2 (C₄) ; 24.7(C₁₈) ; 22.5(₂₀) ; 21.1(C₁₆) ; 13.9(C₂₁)

MS : m/z = 352(6%), 351(15%), 309(15%), 308(54%), 240(42%), 207(30%), 152(100%), 135(52%)

La répartition isomérique est identique à celle de l'exemple 2.

### Exemple 5 Fonctionnalisation du 1-phenyl-cyclohexène par une quantité stoechiométrique d'ions oxoammonium en présence d'eau.

On sait que 2 équivalents d'ions oxoammonium sont nécessaires pour la monofonctionnalisation par OH⁻ et l'oxydation de l'énol formé. Cette méthode ne nécessitant plus la médiamutation des espèces oxydées et réduites pour la régénération, aucune base n'est utilisée et le milieu réactionnel est donc neutre.

Après l'oxydation électrochimique complète de 4 millimoles d'acétamido-TEMPO par le système électrochimique, 2 millimoles de 1 phénylcyclohexène sont ajoutées. L'agitation est maintenue 8 heures jusqu'à décoloration totale. Le traitement du milieu réactionnel est identique à celui utilisé lors de l'exemple 1. L'éluant est un mélange éther/éther de pétrole (3/1). Un rendement de 92% en produit purifié est obtenu avec une sélectivité de 100%. La fonctionnalisation de la double liaison conduit au 1-phénylcyclohexène-3-one (Formule XII):

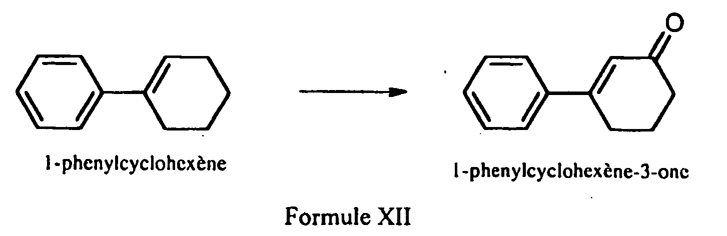

Il faut noter que lorsque les réactions sont conduites avec 1 seul équivalent d'acétamido-TEMPO, la conversion n'atteint que 50%, ce qui est en accord avec le mécanisme réactionnel proposé.

### Exemple 6 : Synthèse de la Tropone à partir du cycloheptatriène en présence d'eau et d'une quantité catalytique de TEMPO régénéré par électrochimie (Formule XIII).

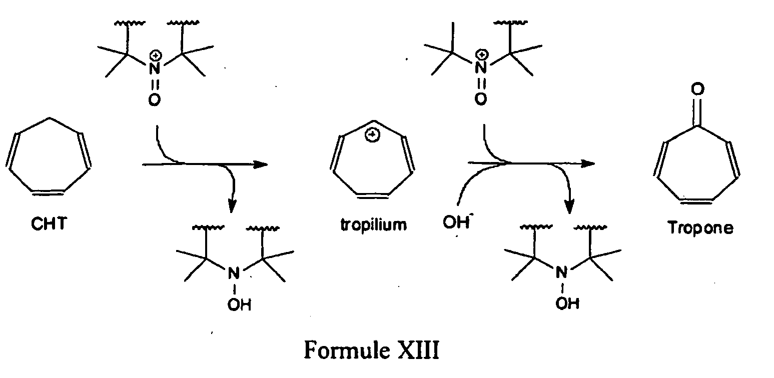

La cellule de 50 cm³ contient :
- 40 ml acétonitrile/eau (12/1)
- NaClO₄ à 0,3 mol.l⁻¹
- 600. 10⁻³ ml de 2,6 lutidine
- 64 mg d'acétamido-TEMPO (0.3mmol)
- 316 10⁻³ ml (3 mmol) de cycloheptatriène 97%

L'électrolyse est effectuée à un potentiel constant de 0,56V/Ag/AgNO₃(0,1M) à 5°C. Le courant électrique décroît de 75 mA à 1 mA après 6,5 heures de réaction et 1191 coulombs consommés (4F/mol).

Le traitement du milieu réactionnel est le suivant :
- évaporation de l'acétonitrile
- reprise dans 40 ml d'eau et extraction par 3 fois 20 ml CH₂Cl₂
- décantation et séchage de la phase organique sur MgSO₄
- évaporation du solvant.

Le brut (320 mg) est dilué dans 0,5 ml de CH₂Cl₂, purifié sur colonne de silice (acétate d'éthyle/éther de pétrole : 1/1). La tropone récupérée (305 mg ; 96%, Rf=0.6) présente une pureté de 99%-GC.

Le caractère aromatique de l'ion tropylium, intermédiaire réactionnel, contribue fortement à la stabilité du carbocation, laquelle permet une durée de vie suffisante pour subir une attaque nucléophile. Dans le cas d'une fonctionnalisation par un hydroxyle, celui-ci est immédiatement déshydrogéné par l'oxoammonium et conduit au carbonyle.

Les fonctionnalisations par des S- et N- nucléophiles sont obtenues en substituant l'eau par les sels appropriés, ex : KSCN, NaN₃ etc...

Les exemples qui suivent décrivent l'application de l'invention aux diènes cycliques en C₆ en présence de 1 à 10 % d'eau dans le milieu réactionnel. Cette réaction s'applique quels que soient les substituants du cycle en C₆.

Dans le cas des diènes cycliques en C₆, que les fonctions alcènes soient conjuguées ou non, le produit obtenu est un composé aromatique. Le taux d'insaturation est donc augmenté d'une unité selon les étapes suivantes :
1. formation d'un carbocation cyclique délocalisé par réaction d'un oxoammonium ;
2. conjugaison des doubles liaisons dans le cas d'un réactif comprenant 2 doubles liaisons non conjuguées ;
3. attaque nucléophile de OH⁻ et formation de l'énol ;
4. déshydratation de l'énol pour conduire à un cycle aromatique. Le mécanisme est identique à celui décrit dans le cas des oléfines grasses polyinsaturées mais la stabilité thermodynamique de la structure aromatique finale permet la déshydratation (étape 4).

### Exemple 7 : aromatisation du Bicyclo-(3,4,0)-nona-3,6-(1)-diène Formule XIV)

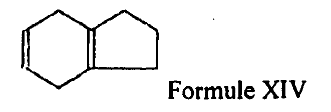

La transformation est conduite dans une cellule électrochimique à trois électrodes contenant 40 cm³ d'ACN (0,1M NaClO₄) et 2,5 cm³ d'H₂O (5%). Le potentiel d'électrolyse est fixé à 0,55V/(Ag/AgNO₃). Le médiateur est obtenu à partir de l'acétamido-TEMPO (67 mg, 0,3 millimole). On ajoute 400 µl de Lutidine et 258 µl de Bicyclo-(3,4,0)-nona-3,6-(1)-diène 2.10⁻³mole.

La régénération électrochimique est optimale. On observe une chute du courant de 150 mA à 0,5 mA en 110 minutes avec un échange de 402 Coulombs correspondant à 2F/mole.

Le mélange réactionnel est évaporé. On ajoute 20 ml de diéthyl-éther et 40 ml d'une solution d'HCl à 5%. On maintient l'agitation pendant 15 min. Après décantation, la solution aqueuse est extraite avec 2 fois 20 ml diéthyl-éther. Les phases organiques sont regroupées et lavées avec 20 ml d'H₂O. La phase organique est ensuite séchée sur MgSO₄. Le diéthyléther est évaporé et le brut est séparé sur une colonne de silice. L'élution est réalisée avec un mélange éther de pétrole : éther diéthylique (2,5 :1 ; RF = 0,5). Le rendement de la synthèse est de 96% en indane (Formule XV):

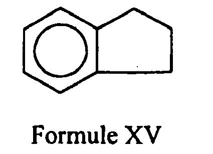

### Exemple 8 : aromatisation des α et γ-terpinènes (Formules XVI) : synthèse du p-cymène (Formule XVII)

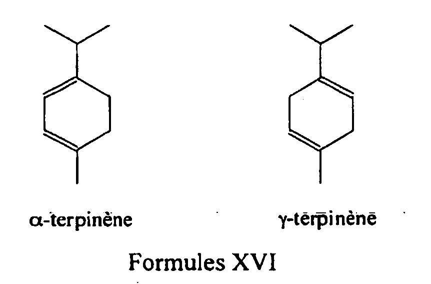

Les conditions générales d'électrolyse sont identiques à celles mises en oeuvre pour l'aromatisation du Bicyclo-(3,4,0)-nona-3,6-(1)-diène.

La quantité initiale de terpinène est de 2 mmoles (273 mg). Dans les deux cas, 398 coulombs sont consommés en 90 minutes.

Le traitement des solutions est identique à celui décrit dans le cas du Bicyclo-(3,4,0)-nona-3,6-(1)-diène.

La transformation est quantitative et 96% de p-cymène (258mg) sont obtenus.

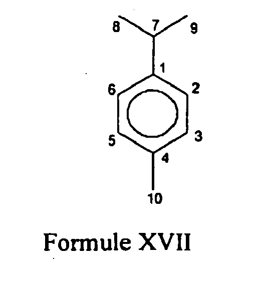

## Revendications

1. Procédé de fonctionnalisation d'une molécule oléfinique possédant au moins deux doubles liaisons ou contenant une double liaison conjuguée avec une structure riche en électrons, en présence d'un médiateur électrophore et d'un agent nucléophile, lequel médiateur électrophore est la forme oxydée (oxoammonium ou nitrosonium) d'une molécule comportant au moins un radical aminoxyle de Formule II: 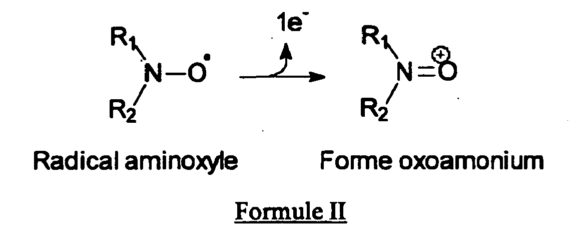 dans laquelle R₁ et R₂ sont des groupements, identiques ou différents, cycliques ou linéaires.

2. Procédé selon la revendication 1, lequel inclut en outre un système de régénération électrochimique du médiateur électrophore.

3. Procédé selon l'une quelconque des revendications 1 à 2, dans lequel le médiateur électrophore est à forme oxoammonium d'une molécule chimique de la famille des radicaux aminoxyles bi-per-méthylés, très préférentiellement un radical aminoxyle bi-per-méthylé portant au moins un radical aminoxyle.

4. Procédé selon l'une quelconque des revendications 1 à 3, dans lequel le médiateur électrophore est le 2,2,6,6-tetraméthylpiperidinyl-1-oxy (TEMPO) ou encore le 4-acétamido-TEMPO, de Formules III :

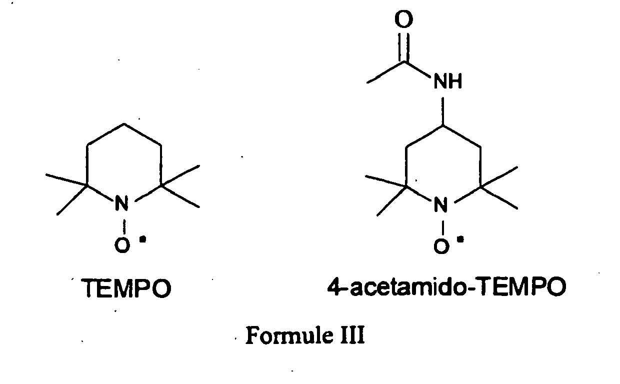

5. Procédé selon l'une quelconque des revendications 1 à 4, dans lequel le médiateur électrophore est utilisé en quantité stoechiométrique, dans un procédé par voie chimique ou dans un procédé par voie électrochimique.

6. Procédé selon la revendication 5, dans lequel la fonctionnalisation est conduite à des températures allant de 0 à 80°C, préférentiellement de 5°C à 40°C.

7. Procédé selon l'une quelconque des revendications 5 ou 6, dans lequel la fonctionnalisation est conduite à un pH allant de 0 à 13, préférentiellement de 4 à 7.

8. Procédé selon l'une quelconque des revendications 5 à 7, dans lequel la fonctionnalisation conduite par voie chimique comprend :
- une première étape dans laquelle dans un réacteur contenant un milieu réactionnel organique ou hydro-organique, on introduit successivement la molécule oléfinique à fonctionnaliser, au moins un équivalent de médiateur et au moins un équivalent d'un composé nucléophile ;
- une deuxième étape dans laquelle le mélange est soumis à une agitation mécanique ou magnétique pendant 1 à 10 heures, préférentiellement pendant 2 à 5 heures.
- une troisième étape dans laquelle le mélange réactionnel est purifié.

9. Procédé selon l'une quelconque des revendications 5 à 7, dans lequel la fonctionnalisation conduite par voie électrochimique comprend :
- une première étape dans laquelle un radical aminoxyle est introduit en quantité au moins stoechiométrique dans une solution électrolytique contenant un électrolyte support ;
- une deuxième étape, dans laquelle, en l'absence de tout potentiel, la molécule oléfinique à fonctionnaliser et au moins un équivalent de nucléophile sont introduits successivement dans la solution électrolytique;
- une troisième étape, dans laquelle on purifie le produit brut obtenu.

10. Procédé selon la revendication 9, dans lequel, dans la première étape, le radical aminoxyle est oxydé en oxoammonium dans un réacteur électrochimique comprenant une éléctrode de travail et une éléctrode de référence Ag/AgN03 en soumettant l'électrode de travail à un potentiel qui peut être compris entre 0 et 1,2 volts, préférentiellement entre 0 et 0,6 volts par rapport à une électrode de référence Ag/AgNO₃.

11. Procédé selon l'une quelconque des revendications 9 ou 10, dans lequel, la quantité de médiateur est de 0,5 à 5 équivalents par rapport à la molécule oléfinique à fonctionnaliser, préférentiellement de 1 à 4 équivalents.

12. Procédé selon l'une quelconque des revendications 9 à 11, dans lequel dans la deuxième étape la solution électrolytique peut être agitée pendant un temps compris entre 1 à 10 heures, préférentiellement compris entre 2 à 5 heures.

13. Procédé selon l'une quelconque des revendications 9 à 12, dans lequel le médiateur électrophore est utilisé en quantité catalytique et que le médiateur électrophore est régénéré par un système électrochimique.

14. Procédé selon la revendication 13, dans lequel la fonctionalisation est réalisée dans un réacteur électrochimique, fermé ou à circulation, composé au moins d'une électrode de travail (anode) et d'une contre-électrode (cathode), comportant en outre une électrode de référence.

15. Procédé selon la revendication 14, dans lequel l'électrode de référence est une électrode Ag/AgNO₃, ou encore une électrode au calomel saturé (ECS), préférentiellement une électrode Ag/AgNO₃.

16. Procédé selon l'une quelconque des revendications 14 ou 15, dans lequel l'électrode de travail est séparée de la contre-électrode par une membrane échangeuse d'ions comme par exemple une membrane du type Nafion, préférentiellement une membrane échangeuse de cations du type Nafion 423.

17. Procédé selon l'une quelconque des revendications 13 à 16, dans lequel on introduit successivement une quantité catalytique de radical aminoxyle, la molécule oléfinique à fonctionnaliser et une quantité au moins équivalente de nucléophile dans la solution électrolytique.

18. Procédé selon l'une quelconque des revendications 13 à 17, dans lequel la fonctionalisation a lieu à pH alcalin, compris entre 7 et 12, préférentiellement entre 9 et 11.

19. Procédé selon la revendication 15, dans lequel le médiateur électrophore est en une quantité allant de 2% à 50 % par rapport à la molécule oléfinique à fonctionnaliser, préférentiellement de 5% à 30%.

20. Procédé selon l'une quelconque des revendications 1 à 19, dans lequel le milieu réactionnel permet l'oxydation du radical aminoxyle en ion oxoammonium (le médiateur) et la réaction de fonctionnalisation et la solubilisation des espèces réactives et de l'électrolyte support dans le cas où la fonctionalisation est conduite par voie électrochimique, choisie parmi l'acétonitrile (ACN), le tétrahydrofurane (THF), le diméthylformamide (DMF), le diméthylsulfoxyde (DMSO) et tout autre mélange eau/solvant organique.

21. Procédé selon la revendication 20, dans lequel lorsque la molécule oléfinique à fonctionnaliser n'est pas soluble dans l'eau, le milieu réactionnel est de l'acétonitrile (ACN) ou du diméthylformamide (DMF), utilisés secs ou en présence d'une quantité d'eau allant de 1 à 80% et préférentiellement de 5 à 40% lorsque le nucléophile choisi est l'eau.

22. Procédé selon l'une quelconque des revendications 9 à 21, dans lequel le milieu réactionnel contient un sel-support permettant le passage du courant dans la solution électrolytique, à des concentrations variant entre 0,02M à 2M, préférentiellement de 0,05 à 0,5M.

23. Procédé selon la revendication 22, dans lequel le sel est choisi parmi NaClO₄, LiClO₄, LiCI.

24. Procédé selon l'une quelconque des revendications 13 à 23, dans lequel le milieu réactionnel est un milieu organique ou hydroorganique alcalin dont le pH est compris entre 7 et 12, préférentiellement entre 9 et 11.

25. Procédé selon la revendication 24, dans lequel le milieu réactionnel comprend une base organique ou inorganique qui n'est pas oxydable par le médiateur, comme par exemple la 2,6-lutidine ou encore la pyridine.

26. Procédé selon l'une quelconque des revendications 24 ou 25, dans lequel le milieu organique ou hydroorganique contenant du NaClO₄ comme sel-support.

27. Procédé selon l'une quelconque des revendications 1 à 26, dans lequel le nucléophile est une molécule chimique excédante en électrons comprenant au moins un atome choisi parmi l'oxygène (O), l'azote (N), le soufre (S), le fluor (F) ou l'iode (I), de préférence une molécule chimique portant un atome choisi parmi H₂O, RCOO', MeOH, N₃⁻, SCN⁻, F, I⁻ ou encore CH₃S⁻.

28. Procédé selon l'une quelconque des revendications 1 à 22, dans lequel le nucléophile est utilisé en une quantité allant de 1 à 10 équivalents et préférentiellement de 1 à 5 équivalents.

29. Procédé selon l'une quelconque des revendications 1 à 28 dans lequel la molécule oléfinique à fonctionnaliser est une oléfine linéaire ou cyclique.

30. Procédé selon la revendication 29, dans lequel la molécule oléfinique à fonctionnaliser est une oléfine grasse poly-insaturée.

31. Procédé selon l'une quelconque des revendications 1 à 30, dans lequel la réaction de fonctionnalisation, et/ou les réactions d'oxydation du radical aminoxyle peut (peuvent) être réalisée(s) à une température variant de 0 à 80°C, préférentiellement de 2 à 40°C.

32. Procédé selon l'une quelconque des revendications 1 à 31, lequel procédé comporte une étape supplémentaire préalable de préparation du médiateur.

33. Procédé selon la revendication 32, dans lequel dans la voie chimique, le radical aminoxyle est utilisé en une quantité allant de 1 à 4 équivalents par rapport à la molécule oléfinique à fonctionnaliser.

34. Procédé selon la revendication 32, dans lequel dans la voie électrochimique, le radical aminoxyle est utilisé en une quantité pouvant aller de 5 à 100% et préférentiellement de 5 à 30% par rapport à la molécule oléfinique à fonctionnaliser.

## Claims

1. Method for functionalising an olefinic molecule having at least two double bonds or containing one double bond with an electron-rich structure, in the presence of an electrophorus mediator and a nucleophilic agent, wherein the electrophorus mediator is the oxidised form (oxoammonium or nitrosonium) of a molecule comprising at least one aminoxyl radical according to Formula II: 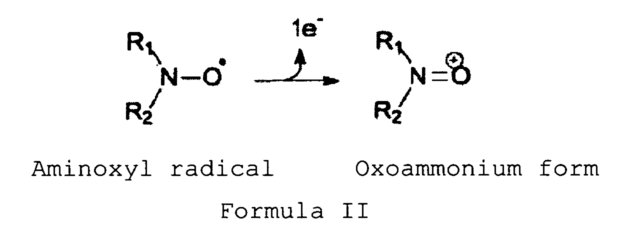 wherein R1 and R2 are identical or different, cyclic or linear, groups.

2. Method according to claim 1, which also includes an electrochemical regeneration system of the electrophorus mediator.

3. Method according to any of claims 1 to 2, wherein the electrophorus mediator is the oxoammonium form of a chemical molecule of the bi-per-methylated aminoxyl radical family, very preferentially a bi-per-methylated aminoxyl radical bearing at least one aminoxyl radical.

4. Method according to any of claims 1 to 3, wherein the electrophorus mediator is 2,2,6,6-tetramethylpiperidinyl-1-oxy (TEMPO) or 4-acetamido-TEMPO, of Formulas III:

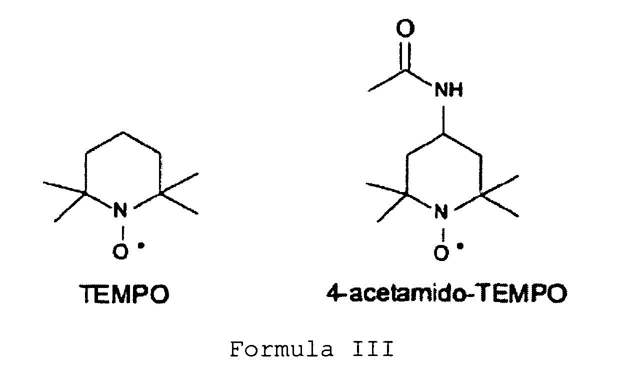

5. Method according to any of claims 1 to 4, wherein the electrophorus mediator is used in stoechiometric quantities, in a chemical process method or in an electrochemical process method.

6. Method according to claim 5, wherein the functionalisation is conducted at temperatures ranging from 0 to 80°C, preferentially from 5°C to 40°C.

7. Method according to any of claims 5 or 6, wherein the functionalisation is conducted at a pH ranging from 0 to 13, preferentially from 4 to 7.

8. Method according to any of claims 5 to 7, wherein the functionalisation conducted by means of a chemical process comprises:
- a first step wherein, in a reaction vessel containing an organic or hydro-organic reaction medium, the olefinic molecule to be functionalised, at least one equivalent of a mediator and at least one equivalent of a nucleophilic compound are introduced successively;
- a second step wherein the mixture is subjected to mechanical or magnetic stirring for 1 to 10 hours, preferentially for 2 to 5 hours;
- a third step wherein the reaction mixture is purified.

9. Method according to any of claims 5 to 7, wherein the functionalisation conducted by means of an electrochemical process comprises:
- a first step wherein an aminoxyl radical is introduced in at least stoechiometric quantities in an electrolytic solution containing a substrate electrolyte;
- a second step wherein, in the absence of any potential, the olefinic molecule to be functionalised and at least one nucleophilic equivalent are introduced successively into the electrolytic solution;
- a third step, wherein the unprocessed product obtained is purified.

10. Method according to claim 9, wherein, in the first step, the aminoxyl radical is oxidised to oxoammonium in an electrochemical reaction vessel comprising a working electrode and an Ag/AgNO₃ reference electrode by subjecting the working electrode to a potential that may be between 0 and 1.2 Volts, preferentially between 0 and 0.6 Volts with respect to an Ag/AgNO₃ reference electrode.

11. Method according to any of claims 9 or 10, wherein the quantity of mediator is from 0.5 to 5 equivalents with respect to the olefinic molecule to be functionalised, preferentially from 1 to 4 equivalents.

12. Method according to any of claims 9 to 11, wherein, in the second step, the electrolytic solution may be stirred for a time between 1 and 10 hours, preferentially between 2 and 5 hours.

13. Method according to any of claims 9 to 12, wherein the electrophorus mediator is used in catalytic quantities and the electrophorus mediator is regenerated by means of an electrochemical system.

14. Method according to claim 13, wherein the functionalisation is conducted in a closed or circulating electrochemical reaction vessel, consisting of at least one working electrode (anode) and one counter-electrode (cathode), also comprising a reference electrode.

15. Method according to claim 14, wherein the reference electrode is an Ag/AgNO₃ electrode, or a saturated calomel electrode (SCE), preferentially an Ag/AgNO₃ electrode.

16. Method according to any of claims 14 or 15, wherein the working electrode is separated from the counter-electrode by an ion exchange membrane, such as for example a Nafion type membrane, preferentially a cation exchange membrane such as Nafion 423.

17. Method according to any of claims 13 to 16, wherein a catalytic quantity of aminoxyl radical, the olefinic molecule to be functionalised and an at least equivalent quantity of nucleophile are introduced successively in the electrolytic solution.

18. Method according to any of claims 13 to 17, wherein the functionalisation takes place at alkaline pH, between 7 and 12, preferentially between 9 and 11.

19. Method according to claim 15, wherein the electrophorus mediator is in a quantity ranging from 2% to 50% with respect to the olefinic molecule to be functionalised, preferentially from 5% to 30%.

20. Method according to any of claims 1 to 19, wherein the reaction medium enables the oxidation of the aminoxyl radical to an oxoammonium ion (the mediator) and the functionalisation reaction and solubilisation of the reactive species and the substrate electrolyte if the functionalisation is conducted by means of an electrochemical process, selected from acetonitrile (ACN), tetrahydrofuran (THF), dimethylformamide (DMF), dimethylsulphoxide (DMSO) and any other water/organic solvent mixture.

21. Method according to claim 20, wherein, if the olefinic molecule to be functionalised is not watersoluble, the reaction medium is acetonitrile (ACN) or dimethylformamide (DMF), used dry or in the presence of a quantity of water ranging from 1 to 80% and preferentially from 5 to 40% if the nucleophile selected is water.

22. Method according to any of claims 9 to 21, wherein the reaction medium contains a salt substrate enabling the flow of current in the electrolytic solution, at concentrations varying between 0.02M and 2M, preferentially from 0.05 to 0.5M.

23. Method according to claim 22, wherein the salt is selected from NaClO₄, LiClO₄, LiCl.

24. Method according to any of claims 13 to 23, wherein the reaction medium is an alkaline organic or hydro-organic medium wherein the pH is between 7 and 12, preferentially between 9 and 11.

25. Method according to claim 24, wherein the reaction medium comprises an organic or inorganic base which is not oxidisable by the mediator, such as for example 2,6-lutidine or pyridine.

26. Method according to any of claims 24 or 25, wherein the organic or hydro-organic medium contains NaClO₄ as the salt substrate.

27. Method according to any of claims 1 to 26, wherein the nucleophile is an electron-excess chemical molecule comprising at least one atom selected from oxygen (O), nitrogen (N), sulphur (S), fluorine (F) or iodine (I), preferentially a chemical molecule comprising an atom selected from H₂O, RCOO⁻, MeOH, N₃⁻, SCN⁻, F⁻, I⁻ or CH₃S⁻.

28. Method according to any of claims 1 to 22, wherein the nucleophile is used in a quantity ranging from 1 to 10 equivalents and preferentially from 1 to 5 equivalents.

29. Method according to any of claims 1 to 28 wherein the olefinic molecule to be functionalised is a linear or cyclic olefin.

30. Method according to claim 29, wherein the olefinic molecule to be functionalised is a polyunsaturated fatty olefin.

31. Method according to any of claims 1 to 30, wherein the functionalisation reaction, and/or the oxidation reactions of the aminoxyl radical may be carried out at a temperature varying from 0 to 80°C, preferentially from 2 to 40°C.

32. Method according to any of claims 1 to 31, wherein the method comprises an additional preliminary mediator preparation step.

33. Method according to claim 32, wherein, in the chemical process, the aminoxyl radical is used in a quantity ranging from 1 to 4 equivalents with respect to the olefinic molecule to be functionalised.

34. Method according to claim 32, wherein, in the electrochemical process, the aminoxyl radical is used in a quantity potentially ranging from 5 to 100% and preferentially from 5 to 30% with respect to the olefinic molecule to be functionalised.

## Patentansprüche

1. Verfahren zur Funktionalisierung eines Olefinmoleküls, welches mindestens zwei Doppelbindungen oder eine Doppelbindung in Verbindung mit einer elektronenreichen Struktur besitzt, unter Anwesenheit eines elektrophoren Beschleunigers und eines nucleophilen Agens, wobei der elektrophore Beschleuniger die oxidierte Form (Oxoammonium oder Nitrosonium) eines Moleküls ist, welches mindestens ein Aminoxylradikal der Formel II enthält: 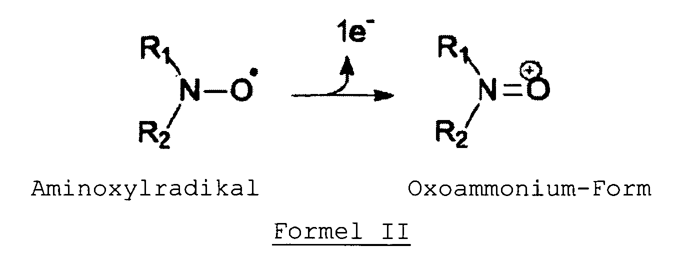 wobei R₁ und R₂ identische oder unterschiedliche zyklische oder lineare Gruppen sind.

2. Verfahren nach Anspruch 1, **dadurch gekennzeichnet, dass** dieses zusätzlich ein System zur elektrochemischen Regenerierung des elektrophoren Beschleunigers umfasst.

3. Verfahren nach einem der Ansprüche 1 bis 2, **dadurch gekennzeichnet, dass** der elektrophore Beschleuniger die Oxoammonium-Form eines chemischen Moleküls der Gruppe der bi-permethylierten Aminoxylradikale ist, und bevorzugterweise ein bi-permethyliertes Aminoxylradikal ist, welches mindestens ein Aminoxylradikal umfasst.

4. Verfahren nach einem der Ansprüche 1 bis 3, **dadurch gekennzeichnet, dass** der elektrophore Beschleuniger das 2,2,6,6-Tetramethylpiperidinyl-1-oxy (TEMPO) oder das 4-Acetamid-TEMPO der Formeln III ist:

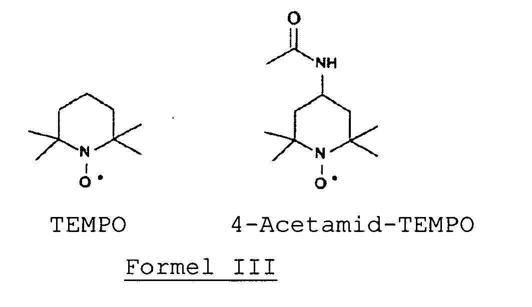

5. Verfahren nach einem der Ansprüche 1 bis 4, **dadurch gekennzeichnet, dass** der elektrophore Beschleuniger in stöchiometrischer Menge in einem chemischen Verfahren oder einem elektrochemischen Verfahren eingesetzt wird.

6. Verfahren nach Anspruch 5, **dadurch gekennzeichnet, dass** die Funktionalisierung bei einer Temperatur zwischen 0 und 80°C, und bevorzugt bei einer Temperatur zwischen 5 und 40°C erfolgt.

7. Verfahren nach einem der Ansprüche 5 oder 6, **dadurch gekennzeichnet, dass** die Funktionalisierung bei einem pH-Wert zwischen 0 und 13, und bevorzugt zwischen 4 und 7 erfolgt.

8. Verfahren nach einem der Ansprüche 5 bis 7, **dadurch gekennzeichnet, dass** die auf chemischen Wege erfolgende Funktionalisierung folgende Schritte umfasst:
- einen ersten Schritt, bei dem nacheinander das zu funktionalisierende Olefinmolekül, mindestens ein Äquivalent des Beschleunigers, und mindestens ein Äquivalent einer nucleophilen Verbindung in einen Reaktor gegeben werden, welcher ein organisches oder ein hydroorganisches Reaktionsmedium enthält;
- einen zweiten Schritt, bei dem das Gemisch über eine Dauer von 1 bis 10 Stunden, und bevorzugt über eine Dauer von 2 bis 5 Stunden mechanisch oder magnetisch gerührt wird;
- einen dritten Schritt, bei dem das Reaktionsgemisch gereinigt wird.

9. Verfahren nach einem der Ansprüche 5 bis 7, **dadurch gekennzeichnet, dass** die auf elektrochemischen Wege erfolgende Funktionalisierung folgende Schritte umfasst:
- einen ersten Schritt, bei dem ein Aminoxylradikal in mindestens stöchiometrischer Menge in eine Elektrolytlösung gegeben wird, welche ein unterstützendes Elektrolyt enthält;
- einen zweiten Schritt, bei dem unter Abwesenheit jeglicher Spannung das zu funktionalisierende Olefinmolekül und mindestens ein Äquivalent des Nucleophils nacheinander in die Elektrolytlösung gegeben werden;
- einen dritten Schritt, bei dem das auf diese Weise erhaltene Gemisch gereinigt wird.

10. Verfahren nach Anspruch 9, **dadurch gekennzeichnet, dass** im ersten Schritt das Aminoxylradikal in einem elektrochemischen Reaktor, welcher eine Arbeitselektrode und eine Referenzelektrode aus Ag/AgNO₃ enthält, mit Oxoammonium oxidiert wird, wobei an der Arbeitselektrode eine Spannung von zwischen 0 und 1,2 Volt, und bevorzugt zwischen 0 und 0,6 Volt in Bezug auf eine Referenzelektrode aus Ag/AgNO₃ angelegt wird.

11. Verfahren nach einem der Ansprüche 9 oder 10, **dadurch gekennzeichnet, dass** die Menge des Beschleunigers zwischen 0,5 und 5 Äquivalenten in Bezug auf das zu funktionalisierende Olefinmolekül, und bevorzugt zwischen 1 und 4 Äquivalenten beträgt.

12. Verfahren nach einem der Ansprüche 9 bis 11, **dadurch gekennzeichnet, dass** im zweiten Schritt die Elektrolytlösung für eine Dauer zwischen 1 und 10 Stunden, und bevorzugt zwischen 2 und 5 Stunden gerührt wird.

13. Verfahren nach einem der Ansprüche 9 bis 12, **dadurch gekennzeichnet, dass** der elektrophore Beschleuniger in katalytischer Menge eingesetzt wird und der elektrophore Beschleuniger mittels eines elektrochemischen Systems regeneriert wird.

14. Verfahren nach Anspruch 13, **dadurch gekennzeichnet, dass** die Funktionalisierung in einem geschlossenen oder zirkulierenden elektrochemischen Reaktor erfolgt, welcher mindestens eine Arbeitselektrode (Anode) und eine Gegenelektrode (Kathode) umfasst und darüber hinaus eine Referenzelektrode enthält.

15. Verfahren nach Anspruch 14, **dadurch gekennzeichnet, dass** die Referenzelektrode eine Elektrode aus Ag/AgNO₃ oder eine Elektrode aus gesättigtem Calomel (ECS) ist, wobei sie bevorzugt eine Elektrode aus Ag/AgNO₃ ist.

16. Verfahren nach einem der Ansprüche 14 oder 15, **dadurch gekennzeichnet, dass** die Arbeitselektrode über eine Ionentauschermembran wie beispielsweise eine Membran aus Nafion, und bevorzugt eine Kationentauschermembran aus Nafion 423 von der Gegenelektrode getrennt ist.

17. Verfahren nach einem der Ansprüche 13 bis 16, **dadurch gekennzeichnet, dass** nacheinander eine katalytische Menge des Aminoxylradikals, das zu funktionalisierende Olefinmolekül, und eine mindestens äquivalente Menge Nucleophil in die Elektrolytlösung gegeben werden.

18. Verfahren nach einem der Ansprüche 13 bis 17, **dadurch gekennzeichnet, dass** die Funktionalisierung bei einem alkalischem pH-Wert zwischen 7 und 12, und bevorzugt zwischen 9 und 11 erfolgt.

19. Verfahren nach Anspruch 15, **dadurch gekennzeichnet, dass** der elektrophore Beschleuniger in einer Menge zwischen 2% und 50% in Bezug auf das zu funktionalisierende Olefinmolekül, und bevorzugt zwischen 5% und 30% vorliegt.

20. Verfahren nach einem der Ansprüche 1 bis 19, **dadurch gekennzeichnet, dass** das Reaktionsmedium die Oxidation des Aminoxylradikals mit Oxoammoniumionen (dem Beschleuniger) und die Funktionalisierungsreaktion sowie die Verflüssigung der reaktiven Spezien und des unterstützenden Elektrolyts erlaubt, wenn die Funktionalisierung auf elektrochemischem Wege erfolgt, wobei es sich um Acetonitril (ACN), Tetrahydrofuran (THF), Dimethylformamid (DMF), Dimethylsulfoxid (DMSO) oder gleich welches andere Gemisch aus Wasser und organischem Lösungsmittel handeln kann.

21. Verfahren nach Anspruch 20, **dadurch gekennzeichnet, dass** das zu funktionalisierende Olefinmolekül nicht wasserlöslich ist und es sich beim Reaktionsmedium um Acetonitril (ACN) oder um Dimethylformamid (DMF) handelt, welche trocken oder unter Vorliegen einer Wassermenge von zwischen 1 und 80%, und bevorzugt zwischen 5 und 40% verwendet werden, wenn als Nucleophil Wasser eingesetzt wird.

22. Verfahren nach einem der Ansprüche 9 bis 21, **dadurch gekennzeichnet, dass** das Reaktionsmedium ein unterstützendes Salz enthält, das ein Fließen von Strom in der Elektrolytlösung erlaubt und dessen Konzentration im Bereich zwischen 0,02M und 2M, und bevorzugt zwischen 0,05M und 0,5M liegt.

23. Verfahren nach Anspruch 22, **dadurch gekennzeichnet, dass** es sich bei dem Salz um NaClO₄, LiClO₄ oder LiCl handelt.

24. Verfahren nach einem der Ansprüche 13 bis 23, **dadurch gekennzeichnet, dass** es sich beim Reaktionsmedium um ein alkalisches organisches oder hydroorganisches Medium handelt, dessen pH-Wert im Bereich zwischen 7 und 12, und bevorzugt zwischen 9 und 11 liegt.

25. Verfahren nach Anspruch 24, **dadurch gekennzeichnet, dass** das Reaktionsmedium eine organische oder anorganische Lauge enthält, welche nicht vom Beschleuniger oxidiert wird, wie z. B. 2,6-Lutidin oder auch Pyridin.

26. Verfahren nach einem der Ansprüche 24 oder 25, **dadurch gekennzeichnet, dass** das organische oder hydroorganische Medium als unterstützendes Salz NaClO₄ enthält.

27. Verfahren nach einem der Ansprüche 1 bis 26, **dadurch gekennzeichnet, dass** es sich beim Nucleophil um ein chemisches Molekül handelt, welches überschüssige Elektronen und mindestens ein Sauerstoff- (O), Stickstoff- (N), Schwefel- (S), Fluor- (F) oder Jod- (I) Atom enthält, und es sich bevorzugt um ein chemisches Molekül handelt, welches ein H₂O-, RCOO -, MeOH-, N₃⁻-, SCN⁻-, F⁻-, I⁻- oder CH₃S⁻-Atom enthält.

28. Verfahren nach einem der Ansprüche 1 bis 22, **dadurch gekennzeichnet, dass** das Nucleophil in einer Menge zwischen 1 und 10 Äquivalenten, und bevorzugt zwischen 1 und 5 Äquivalenten eingesetzt wird.

29. Verfahren nach einem der Ansprüche 1 bis 28, **dadurch gekennzeichnet, dass** es sich bei dem zu funktionalisierenden Olefinmolekül um ein lineares oder zyklisches Olefin handelt.

30. Verfahren nach Anspruch 29, **dadurch gekennzeichnet, dass** es sich bei dem zu funktionalisierenden Olefinmolekül um ein mehrfach ungesättigtes Fettolefin handelt.

31. Verfahren nach einem der Ansprüche 1 bis 30, **dadurch gekennzeichnet, dass** die Funktionalisierungsreaktion, und/oder die Oxidationsreaktionen des Aminoxylradikals bei einer Temperatur zwischen 0 und 80 °C, und bevorzugt zwischen 2 und 40 °C ausgeführt werden kann (können).

32. Verfahren nach einem der Ansprüche 1 bis 31, **dadurch gekennzeichnet, dass** das Verfahren einen zusätzlichen und vorgeschalteten Schritt zur Vorbereitung des Beschleunigers umfasst.

33. Verfahren nach Anspruch 32, **dadurch gekennzeichnet, dass** bei der Ausführung auf chemischen Wege das Aminoxylradikal in einer Menge zwischen 1 und 4 Äquivalenten in Bezug auf das zu funktionalisierende Olefinmolekül eingesetzt wird.

34. Verfahren nach Anspruch 32, **dadurch gekennzeichnet, dass** bei der Ausführung auf elektrochemischen Wege das Aminoxylradikal in einer Menge eingesetzt wird, die zwischen 5 und 100%, und bevorzugt zwischen 5 und 30% in Bezug auf das zu funktionalisierende Olefinmolekül liegen kann.
